# FASCICULE DE BREVET EUROPEEN

(11) **EP 3 625 481 B1**
(45) Date de publication et mention de la délivrance du brevet: **17.02.2021**
(21) Numéro de dépôt: 18725187.1
(22) Date de dépôt: 15.05.2018
(51) Int. Cl.: F16H 59/04, F16H 61/36, F16H 63/32, F16H 3/00, F16H 3/24

(54) **BOÎTE DE VITESSES POUR ÉQUIPEMENT DE MOTOCULTURE ET ÉQUIPEMENT DE MOTOCULTURE COMPRENANT UNE TELLE BOÎTE DE VITESSES**
GETRIEBE FÜR EINE MECHANISIERTE LANDWIRTSCHAFTLICHE VORRICHTUNG UND MECHANISIERTE LANDWIRTSCHAFTLICHE VORRICHTUNG MIT EINEM DERARTIGEN GETRIEBE
GEARBOX FOR MECHANIZED FARMING IMPLEMENT AND MECHANIZED FARMING IMPLEMENT COMPRISING SUCH A GEARBOX

(30) Priorité: 19.05.2017 FR 1754436
(43) Date de publication de la demande: 25.03.2020
(73) Titulaire: Pubert Henri SAS, 85110 Chantonnay (FR)
(72) Inventeur: LEJEUNE, Pierre, 85110 Sainte-Cecile (FR); GERBAUD, Nicolas, 85110 Monsireigne (FR); VION, Peter, 85700 Pouzauges (FR)
(74) Mandataire: Vidon Brevets & Stratégie
(86) Numéro de dépôt international: PCT/EP2018/062582
(87) Numéro de publication internationale: WO 2018/210855

(56) Documents cités:
- EP-A1- 3 159 579
- FR-A1- 2 965 878
- US-A1- 2012 096 971

## Description

### 1. Domaine technique de l'invention

L'invention concerne les boîtes de vitesses pour équipements mobiles, en particulier les boîtes de vitesses pour équipements de motoculture, et plus spécifiquement les boîtes de vitesses pour motobineuses.

L'invention concerne également les équipements de motoculture, et plus particulièrement les motobineuses et les motoculteurs, comprenant de telles boîtes de vitesses.

### 2. Arrière-plan technologique

Une boîte de vitesses pour équipement de motoculture est destinée à interconnecter des moyens moteurs d'un équipement de motoculture à des organes d'entraînement de l'équipement. Le document EP-A1-3159579 décrit une telle boîte de vitesses. Un tel équipement de motoculture est par exemple une motobineuse, un motoculteur, une débroussailleuse ou tout équipement équivalent.

Les équipements les plus perfectionnés mettent en œuvre des boîtes de vitesses comprenant une ou plusieurs vitesses de marche avant. Le passage d'une vitesse à une autre est obtenu par une action, en général manuelle, sur un sélecteur de vitesse qui permet par son déplacement, de modifier les rapports de transmission de la boîte de vitesses.

Certaines boîtes de vitesses disposent en outre d'une marche arrière pour faciliter les manœuvres, par exemple au voisinage d'un obstacle, telle qu'une racine, une pierre, etc., et d'un mécanisme de débrayage pour faciliter le changement d'allure et le passage de la marche avant à la marche arrière.

Il est connu que de telles boîtes de vitesses comprennent :
- un arbre d'entrée adapté pour être entraîné en rotation par des moyens moteurs,
- un arbre de sortie adapté pour entraîner des organes d'entraînement de l'équipement,
- un sélecteur de vitesse adapté pour coopérer avec un pignon baladeur monté mobile sur l'arbre d'entrée pour permettre par son déplacement une modification des rapports de transmission entre l'arbre d'entrée et l'arbre de sortie.

Ces boîtes de vitesses mettent en œuvre un grand nombre de pièces mécaniques complexes, et sont logées dans un carter fabriqué en aluminium, ce qui en fait des boîtes onéreuses, lourdes et encombrantes.

Par ailleurs, les carters de ces boîtes de vitesse sont alimentés en huile pour assurer un graissage de l'ensemble des organes logés dans le carter, notamment les arbres et pignons. Un bouchon étanche permet de maintenir l'huile à l'intérieur du carter et de vidanger ce dernier lorsque nécessaire.

Pour que l'étanchéité de ces carters soit optimale, les demi-coques supérieure et inférieure constituant le carter sont classiquement assemblées par collage, ce qui rend le démontage du carter du boîtier de vitesse fastidieux lors d'opérations de maintenance ou de réparation.

En outre, les vapeurs d'huile peuvent être à l'origine de surpressions dans l'espace intérieur étanche du carter.

Certaines boîtes de vitesses sont commandées par l'intermédiaire d'un câble de commande reliant le sélecteur de vitesse à une poignée de commande agencée par exemple sur le guidon de manœuvre de l'équipement, le câble de commande étant relié à une fourchette qui agit directement sur le pignon baladeur pour le déplacer le long de l'arbre d'entrée. L'extrémité supérieure de la fourchette s'étend à travers la demi-coque supérieure du carter pour que la fourchette puisse être commandée en déplacement.

Une telle solution reste toutefois relativement complexe et coûteuse.

Par ailleurs, de telles boîtes de vitesses nécessitent une maintenance régulière pour régler et/ou changer le câble de commande.

Il existe donc un besoin d'optimiser la conception des boîtes de vitesses pour les équipements de motoculture, et plus spécifiquement les boîtes de vitesses pour les motobineuses.

### 3. Objectifs de l'invention

Dès lors, l'invention vise à pallier au moins certains des inconvénients des boîtes de vitesses de l'état de la technique.

L'invention vise à fournir, dans au moins un mode de réalisation, une boîte de vitesses compacte, moins lourde que les boîtes de l'art antérieur et économique à fabriquer.

L'invention vise aussi à fournir, dans au moins un mode de réalisation, une boîte de vitesses comportant un nombre réduit d'éléments mécaniques, qui permette un assemblage très facile des différents éléments constituants l'équipement de motoculture et coûtant peu cher à fabriquer.

L'invention vise aussi à fournir, dans au moins un mode de réalisation, une boîte de vitesses à au moins une vitesse de marche avant et une vitesse de marche arrière dont le passage d'une vitesse de marche avant à la vitesse de marche arrière peut être effectué rapidement.

L'invention vise aussi à fournir, dans au moins un mode de réalisation, un équipement de motoculture équipé d'une boîte de vitesse dont la maintenance est aisée et peu fréquente, et qui présente une durée de vie supérieure aux boîtes de vitesses de l'état de la technique.

### 4. Exposé de l'invention

Pour ce faire, l'invention concerne une boîte de vitesses pour équipement de motoculture avec les caractéristiques selon la revendication 1.

L'invention propose une motobineuse comprenant un système d'inversion de rotation des outils fiable et économique.

La boîte de vitesse est commandée par l'intermédiaire d'un câble de commande reliant une poignée de commande agencée par exemple sur le guidon de manœuvre de l'équipement à un palonnier relié à une fourchette qui agit directement sur le pignon baladeur pour le déplacer le long de l'arbre d'entrée.

Le passage d'une vitesse de marche avant à la vitesse de marche arrière peut être effectué rapidement. De même, lorsque la boîte est en position de marche arrière, il est aisé pour l'utilisateur de passer rapidement dans n'importe quelle position de marche avant.

L'inverseur de marche de la boîte de vitesses de l'invention présente un nombre réduit d'éléments mécaniques, ce qui permet un assemblage très facile des différents éléments constituants la boîte de vitesse et réduit les coûts de fabrication.

Selon un aspect particulier de l'invention, l'ensemble palonnier et fourchette étant monté mobile en rotation selon un axe vertical à l'intérieur du carter de la boîte de vitesses, les arbres d'entrée et de sortie s'étendant horizontalement.

Selon un aspect particulier de l'invention, le carter de la boîte de vitesses est formé de deux demi-coques, dites respectivement demi-coque gauche et demi-coque droite, assemblées en regard l'une de l'autre selon un plan de jonction vertical et définissant un logement de réception des arbres, du pignon baladeur, d'une partie du palonnier et de la fourchette notamment, lesdites demi-coques étant fabriquées en plastique injecté.

Selon un aspect particulier de l'invention, ladite première extrémité dudit palonnier s'étend à travers une ouverture latérale ménagée dans une première desdites demi-coques.

Selon un aspect particulier de l'invention, la deuxième extrémité dudit palonnier s'étend à travers une ouverture latérale ménagée dans la deuxième desdites demi-coques.

Selon un aspect particulier de l'invention, la ou lesdites ouvertures sont dimensionnées pour laisser passer l'air entre l'intérieur et l'extérieur du carter.

Selon un aspect particulier de l'invention, la deuxième extrémité dudit palonnier est solidaire de la surface extérieure d'une desdites demi-coques par l'intermédiaire d'un ressort de rappel.

Selon un aspect particulier de l'invention, les deux demi-coques sont assemblées par des moyens de solidarisation réversible, chacune desdites demi-coques comprenant sur sa surface de jonction avec l'autre demi-coque un joint d'étanchéité.

L'invention concerne également un équipement de motoculture comprenant une boîte de vitesses selon l'invention.

Selon un aspect particulier de l'invention, l'équipement comprend une poignée de commande et un câble de commande reliant ladite poignée de commande à une première extrémité dudit palonnier de sorte qu'une sollicitation de la poignée de commande entraîne un changement de rapport de transmission.

Préférentiellement, l'équipement de motoculture selon l'invention appartient au groupe comprenant les motoculteurs, les débroussailleuses à roues, les motobineuses, les microbineuses, les faucheuses broyeuses, les émousseurs, les scarificateurs, et les aérateurs de pelouse.

L'invention concerne également une boîte de vitesses et un équipement muni d'une boîte de vitesses caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées, dans lesquelles :
- la figure 1 est une vue en perspective éclatée d'une portion d'un équipement selon un mode de réalisation de l'invention sur laquelle est représenté le carter de la chaîne d'entraînement des outils ;
- la figure 2 est une vue en perspective éclatée d'une portion d'un équipement selon un mode de réalisation de l'invention sur laquelle sont représentées une boîte de vitesses selon un mode de réalisation de l'invention, un sélecteur de vitesse de la boîte de vitesses, la courroie d'embrayage, ainsi que les poulies moteur et réceptrice ;

- la figure 3 est une vue en perspective éclatée d'une boîte de vitesses selon un mode de réalisation de l'invention ;
- la figure 4 est une vue des éléments de la boîte de vitesses de la figure 3, le carter n'étant pas représenté, du câble de commande et de la poignée de commande ;
- la figure 5 est une vue en coupe, dans un plan vertical, de la boîte de vitesses de la figure 3 ;
- les figures 6A et 6B sont des vues en perspective montrant le montage de la boîte de vitesses de la figure 3 (avec et sans une des demi-coques) sur le cache intérieur de la motobineuse ;
- la figure 7 est une vue de face d'une demi-coque montrant la gorge destinée à recevoir un joint torique d'étanchéité entre les deux demi-coques et les dents de blocage du joint dans la gorge.

### 6. Description détaillée d'un mode de réalisation de l'invention

Une boîte de vitesses, ou de transmission, selon l'invention est destinée à être montée sur un équipement de motoculture, tel une motobineuse.

Dans toute la description détaillée qui suit en référence aux figures, sauf indication contraire, chaque pièce de la boîte de vitesses est décrite telle qu'elle est agencée lorsque les arbres d'entrée et de sortie de la boîte de vitesses s'étendent parallèlement au sol.

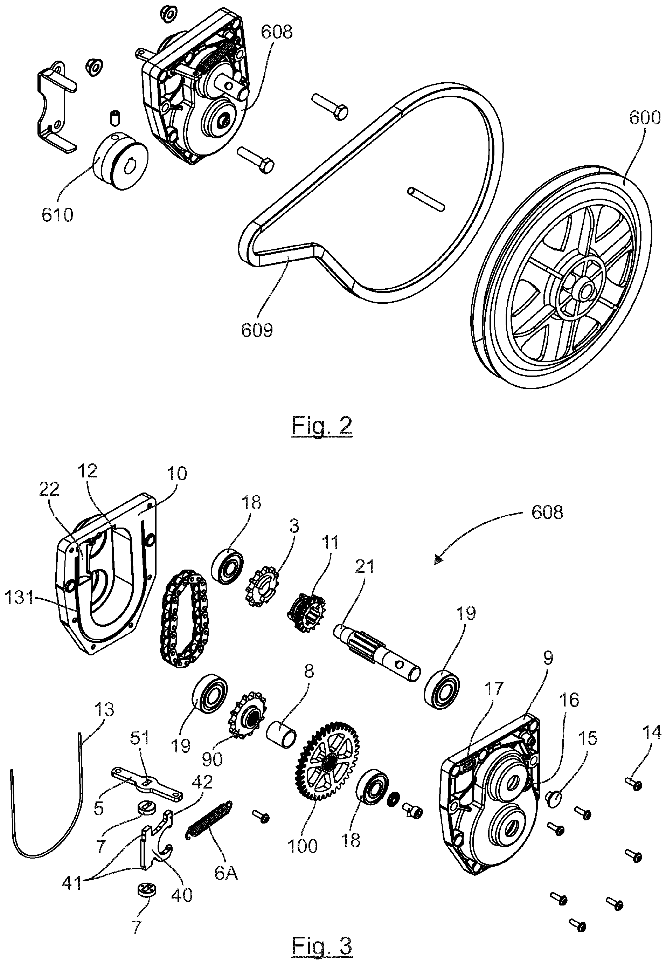

Cet agencement est représenté notamment sur la figure 3 qui est une vue en perspective éclatée d'une boîte de vitesses d'une motobineuse selon un mode de réalisation de l'invention.

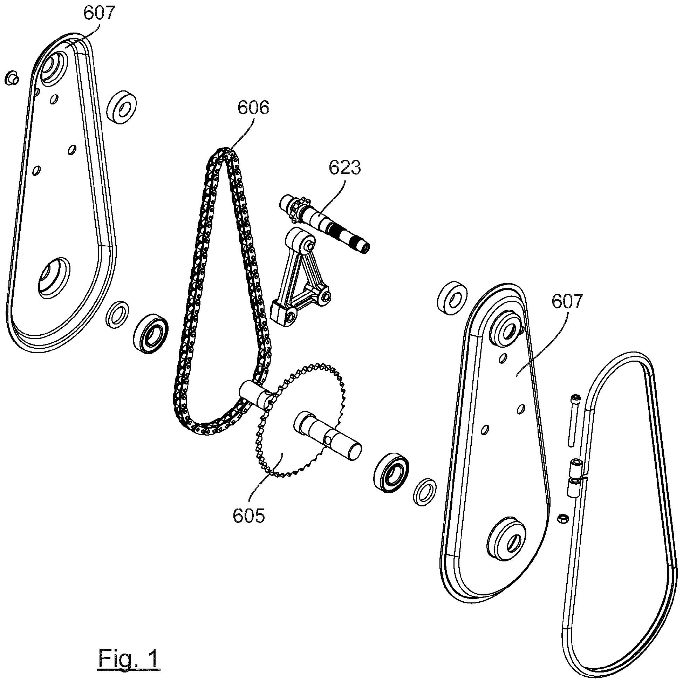

Comme illustré sur les figures 1 et 2, la motobineuse comprend de préférence, un châssis (non représenté) supportant la boîte de vitesses 608 selon l'invention, une roue de transport et deux outils de travail du sol (non représentés) montés en rotation sous le châssis autour d'un arbre 605 transversal mû par une chaîne 606 disposée dans un carter dont les deux joues sont référencées 607 sur la figure 1.

De façon classique, la chaîne 606 est entraînée par l'axe d'une poulie, dite réceptrice, 600 située à l'arrière du châssis, au-dessus de ce dernier. La poulie réceptrice 600 est elle-même entraînée par un moteur thermique, situé à l'avant du châssis, l'arbre de sortie du moteur portant une poulie moteur 610 qui est reliée à la poulie réceptrice 600 par une courroie 609 d'embrayage. La poulie réceptrice 600 est en liaison avec la boîte de vitesses 608 et les outils. L'arbre de sortie 23 de la boîte de vitesses 608 est visible sur la figure 1.

Comme illustré sur la figure 3, la boîte de vitesses 608 comprend un carter formé de deux demi-coques, à savoir une demi-coque 10 gauche et une demi-coque 9 droite.

Ainsi, les demi-coques 9, 10 latérales sont assemblées selon un plan de jonction vertical, contrairement aux carters des boîtes de vitesses de l'art antérieur qui comprennent une demi-coque supérieure et une demi-coque inférieure assemblées selon un plan de jonction horizontal.

Les deux demi-coques 9, 10 du carter sont réalisées en plastique injecté (tel que du polyamide ou du polyamide renforcé de fibres de verre), et non pas en aluminium comme pour les coques de l'art antérieur.

Le carter de la boîte de vitesses 608 est par conséquent léger, peu coûteux à fabriquer, et néanmoins suffisamment robuste pour supporter les arbres et les moyens d'engrènement.

De façon avantageuse, les demi-coques 9, 10 sont solidarisées l'une à l'autre par l'intermédiaire de vis 14 qui sont insérées directement dans le plastique constituant ces demi-coques.

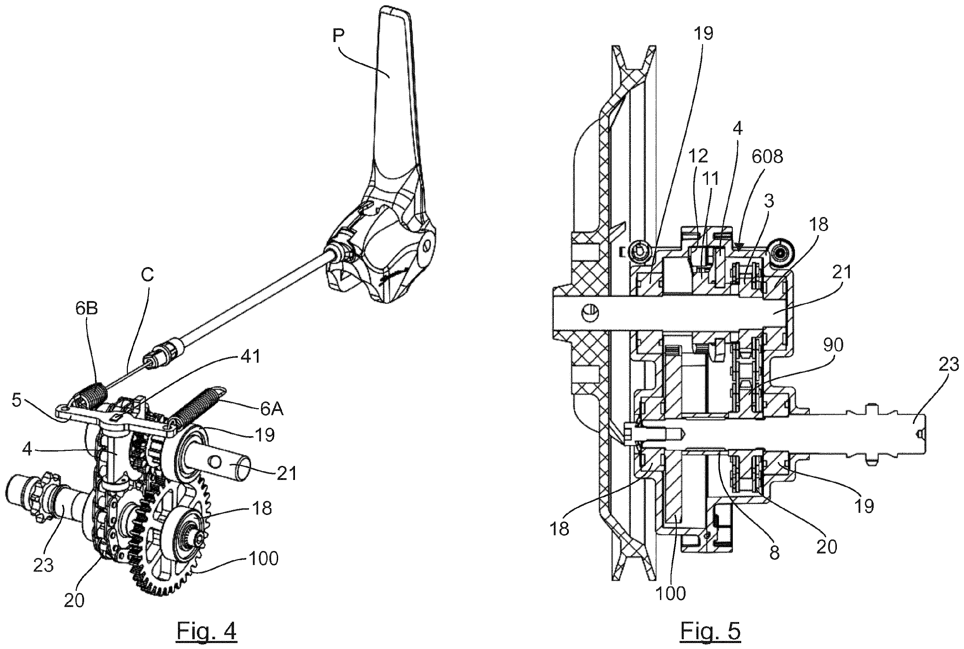

A l'intérieur du carter sont logés un arbre d'entrée 21 en partie supérieure, et un arbre de sortie 23 en partie inférieure (figures 4 à 6B).

Selon le mode de réalisation des figures, les arbres d'entrée 21 et de sortie 23 sont parallèles et s'étendent dans un plan horizontal.

Par ailleurs, dans ce mode de réalisation, la boîte de vitesses 608 fournit une vitesse en marche avant et une vitesse en marche arrière.

L'arbre d'entrée 21 est porté à chacune de ses extrémités par un roulement 18, 19. Sur cet arbre d'entrée 21 sont montés un pignon baladeur 11 et un pignon fou 3.

L'arbre de sortie 23 est porté à chacune de ses extrémités par un roulement 18, 19. Sur l'arbre de sortie 23 sont montés le pignon 90 de marche avant et le pignon 100 de marche arrière qui présentent des diamètres différents et qui sont espacés par une entretoise 8.

On note que les pignons de la boîte de vitesses 608 sont de préférence réalisés par frittage de poudre d'acier, et sont donc économiques à fabriquer.

En fonctionnement, l'arbre d'entrée 21 est mû par le moteur d'entrainement de la motobineuse et entraîne l'arbre de sortie 23 par l'intermédiaire de la chaine 20.

La boîte de vitesses 608 est configurée de sorte que le pignon baladeur 11 puisse occuper deux positions distinctes le long de l'arbre d'entrée 21 : une position de marche avant, dans laquelle un premier rapport de transmission est réalisé entre l'arbre d'entrée 21 et l'arbre de sortie 23, les arbres 21, 23 tournant dans le même sens de rotation, et une position de marche arrière, dans laquelle un deuxième rapport de transmission est réalisé entre l'arbre d'entrée 21 et l'arbre de sortie 23, les arbres 21, 23 tournant dans des sens de rotation opposés.

Le pignon 90 de marche avant coopère avec le pignon fou 3 par le biais d'une chaine 20 dans la position de marche avant (vue en coupe de la figure 5), et le pignon 100 de marche arrière est adapté pour coopérer avec le pignon baladeur 11 lorsque ce dernier est dans la position de marche arrière.

Ainsi, avantageusement, les pignons nécessaires au fonctionnement en marche arrière, en l'occurrence le pignon baladeur 11 et le pignon 100 de marche arrière ne travaillent (ou ne sont "actifs") que lorsque la marche arrière est sélectionnée.

Selon un mode préférentiel de réalisation de l'invention, le changement de rapport de transmission se fait par l'intermédiaire d'un câble de commande C relié à une poignée de commande P agencée, par exemple, sur le guidon de manœuvre de l'équipement (figure 4).

Le câble de commande C est relié à un palonnier 5 actionneur solidaire d'une fourchette 4 qui agit directement sur le pignon baladeur 11 pour le déplacer le long de l'arbre d'entrée 21, entre une position où il coopère avec le pignon 10 de marche arrière (dans la position de marche arrière) et une position où il ne coopère avec aucun pignon de l'arbre de sortie 23 (dans la position de marche avant illustrée sur la figure 5).

Le palonnier 5 prend la forme d'une tige dont la portion centrale est cylindrique et est monté fixe sur la fourchette 4, l'ensemble étant monté mobile en rotation au sein du carter de sorte à ce qu'une action d'un utilisateur sur la poignée de commande P entraîne la rotation du palonnier 5 et de la fourchette 4, et donc le déplacement du pignon baladeur 11 et son engrènement avec le pignon 100 de marche arrière.

Il est à noter que ce palonnier 5, prenant la forme d'une tige, s'étend dans un plan transversal au plan de jonction vertical des deux demi-coques 9, 10 de la boîte de vitesse 608.

Plus encore, le palonnier 5 s'étend dans un plan parallèle aux axes des arbres d'entrée 21 et de sortie 23.

Lorsque l'utilisateur relâche la poignée de commande P, le pignon baladeur 11 ne coopère plus avec le pignon 100 de marche arrière.

L'extrémité supérieure de la fourchette 4 présente un téton 41 qui est logé dans une lumière ou fente 51 du palonnier 5 (figure 4). Ce dernier est monté par simple gravité au-dessus de la fourchette 4 et s'étend de part et d'autre du téton 41. L'axe de rotation du palonnier 5 et de la fourchette 4 est vertical, et orthogonal aux axes des arbres d'entrée 21 et de sortie 23.

Au préalable, les entretoises 7 sont enfoncées sur les tétons 41 supérieur et inférieur de la fourchette 4. Ces entretoises prennent la forme de bagues présentant une fente de passage des tétons 41 de la fourchette 4.

Le palonnier 5 s'étend en partie à l'intérieur du carter et est monté pivotant à l'intérieur de ce dernier.

La portion centrale cylindrique du palonnier 5 et l'entretoise 7 inférieure sont logées dans des logements 22 hémi-cylindriques ménagés dans les parois des demi-coques 9, 10.

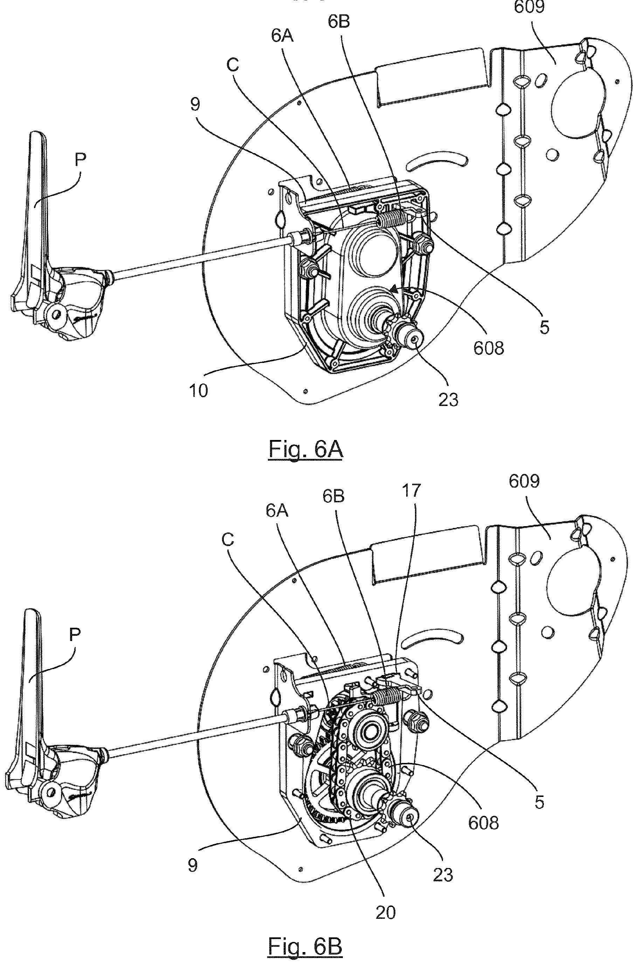

Les extrémités du palonnier 5 s'étendent latéralement à travers une ouverture 17 ménagée dans les demi-coques 9, 10 du carter (figures 6A et 6B) de manière à ce qu'un utilisateur puisse actionner le palonnier 5, et donc la fourchette 1 de commande, en manœuvrant la poignée de commande P.

Ces ouvertures 17 de passage des extrémités du palonnier 5 ne nécessitent pas de joint et permettent une mise à l'air libre de l'espace intérieur du carter.

L'étanchéité du carter n'est donc pas totale, contrairement aux carters de l'art antérieur qui nécessitent une étanchéité totale pour éviter les fuites d'huile et présentent des risques de surpression.

Le passage de la marche avant à la marche arrière est obtenu par le déplacement de la poignée de commande P, qui elle-même entraîne le déplacement en rotation du palonnier 5 par le biais du câble de commande C, puis de la fourchette 4, de manière à positionner le pignon baladeur 11 dans une position définissant le rapport de transmission entre l'arbre d'entrée 21 et l'arbre de sortie 23.

Une première extrémité du palonnier 5 est solidarisée au câble de commande C par le biais d'un ressort 6B.

La deuxième extrémité du palonnier 5, opposée à la première extrémité, est solidarisée à un ressort de rappel 6A pour permettre le retour de la fourchette 4 (et donc du palonnier 5) dans sa position initiale, c'est-à-dire en position de marche avant, le ressort de rappel 6A étant solidarisé à la surface extérieure du carter, et en particulier de la demi-coque 9.

Le palonnier 5 présente à ses extrémités des trous de passage destinés à accrocher les ressorts 6A, 6B.

L'invention propose ainsi une motobineuse avec un inverseur de rotation des outils qui est fiable et économique.

Des butées 12 ménagées dans chacune des demi-coques permettent l'arrêt en rotation de la fourchette 4, et donc de la translation du pignon baladeur 11. Le nez 42 de la fourchette est apte à venir en contact avec ces butées 12 de fourchette. Ceci évite les déformations plastiques, ou matage, non souhaitées des demi-coques sous l'effet des chocs, et l'usure de la fourchette 4.

La conception, en particulier la forme intérieure, du carter permet la mise en œuvre d'un lit de graisse autour de la chaine et des pignons, de même qu'entre ces derniers et les parois intérieures du carter (contrairement aux boîtes de vitesses classiques qui utilisent de l'huile à l'intérieur du carter, ce qui nécessite de vidanger ce dernier lorsque nécessaire).

Du fait de l'espace intérieur réduit du carter, le jeu entre les parois intérieures du carter et la chaine et les pignons est minimal. Les projections de graisse lorsque la chaîne se déplace en rotation sont renvoyées par les parois intérieures du carter vers la chaîne. Le besoin en graisse est, par conséquent, réduit.

Un bouchon de remplissage 15 disposé dans une ouverture de remplissage 16 située sur la demi-coque 9 droite de la figure 3, entre les passages des arbres d'entrée et de sortie, permet de graisser en priorité la chaine 20.

De façon avantageuse, l'étanchéité du carter, et en particulier de l'assemblage entre les demi-coques 9 et 10, est assuré par la mise en œuvre de joints toriques 13 en "U" qui sont disposés sur les surfaces intérieures des demi-coques 9 et 10, la base du "U" étant située en partie basse des demi-coques 9 et 10.

Plus précisément, le joint torique 13 est logé dans une gorge 131 en « U » ménagée sur la surface intérieure de jonction de la demi-coque 10. La face de placage de la demi-coque 9 gauche est quant à elle parfaitement plane et lisse de manière à assurer l'écrasement du joint torique 13 lors de l'assemblage vissé des demi-coques 9 et 10.

Le joint 13 torique cylindrique est en matière de type nitrile, par exemple, ou dans un autre matériau adapté.

Le maintien du joint 13 dans la gorge 131 correspondante peut être assuré par une ou plusieurs dents 1321 de blocage.

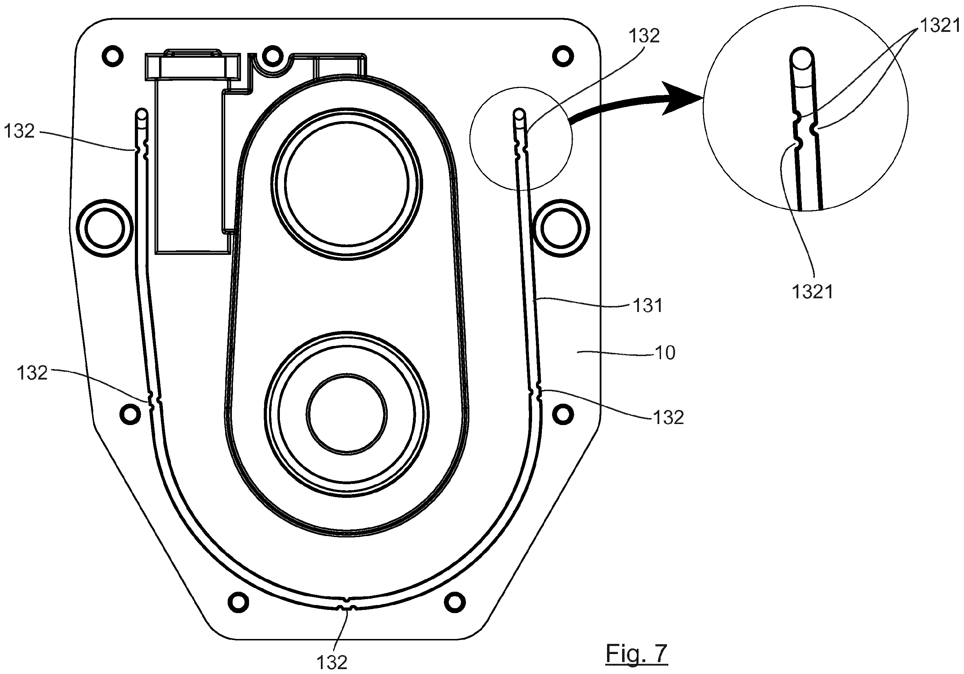

Selon un mode de réalisation particulier illustré sur la figure 7, cinq ensembles 132 de trois dents 1321 de blocage sont ménagés dans la gorge 131 en « U » de la demi-coque 10.

Cette solution d'étanchéité est avantageuse en ce sens qu'elle permet un montage aisé du joint, un démontage aisé du carter du boîtier de vitesse lors d'opérations de maintenance ou de réparation au cours de la vie du produit, et ce sans dégrader le niveau d'étanchéité.

En effet, l'étanchéité des demi-coques des boîtiers de vitesse d'engins de motoculture est généralement assuré par un joint de colle, ce qui présente divers inconvénients (nettoyage ou attaque de surface préalable au collage, démontage compliqué avec risque de détérioration des pièces internes ou des demi-coques).

L'évent est assuré par l'ouverture 17 de passage du palonnier 5 ménagée dans chacune des demi-coques 9, 10. Ceci permet d'éviter de rajouter un trou et un bouchon d'évent. Du fait que l'ouverture 17 de passage soit ménagée dans la partie supérieure des demi-coques, la graisse ne peut pas s'échapper du carter.

Par ailleurs, aucun joint de type "spi", ou joint d'arbre tournant, n'est mis en œuvre sur l'arbre de sortie 23 et l'arbre d'entrée 21, ce qui réduit la complexité et les coûts de la boîte de vitesses de l'invention.

En résumé, la maintenance de la boîte de vitesses conforme à l'invention est aisée du fait notamment :
- de la solution d'étanchéité choisie, par joint torique, les carters n'étant pas « collés » comme dans la plupart des boîtes de vitesse des engins du marché;
- qu'il n'est pas nécessaire de régler le câble de sélection ;
- du lubrifiant utilisé et du mode de lubrification (graisse très basique et plus simple à gérer que de l'huile).

La figure 5 est une vue en coupe dans un plan vertical de la boîte de vitesses 608 montrant le positionnement de la fourchette 4 sur le pignon baladeur 11.

Les figures 6A et 6B montrent le montage par vissage de la boîte de vitesses 608 (avec et sans la demi-coque 10) directement sur le cache intérieur 609 de la motobineuse, sur lequel est ensuite monté un capot de protection (non illustré).

L'invention ne se limite pas au seul mode de réalisation décrit.

La motobineuse telle que décrite dans la présente demande, peut être mis en œuvre avec une boîte de vitesse d'un type différent de celle représentée sur les figures annexées.

En particulier, une boîte de vitesses selon l'invention peut présenter une architecture interne différente.

Par exemple, les arbres d'entrée et de sortie peuvent être coaxiaux et la boîte de vitesses peut présenter un nombre différent de vitesses, et notamment deux rapports de marche avant ou plus.

## Revendications

1. Boîte de vitesses (608) pour un équipement de motoculture, destinée à interconnecter des moyens moteurs à des organes d'entraînement de l'équipement, la boîte de vitesses (608) comprenant
- un carter de la boîte de vitesses (608),
- un arbre d'entrée (21) adapté pour être entraîné en rotation par lesdits moyens moteurs,
- un arbre de sortie (23) adapté pour entraîner lesdits organes d'entraînement de l'équipement,
- un pignon, dit pignon (11) baladeur, monté mobile sur l'arbre d'entrée (21), et adapté pour occuper au moins une position de marche avant dans laquelle un premier rapport de transmission est réalisé entre l'arbre d'entrée et l'arbre de sortie, les arbres tournant dans le même sens de rotation, et au moins une position de marche arrière, dans laquelle un deuxième rapport de transmission est réalisé entre l'arbre d'entrée et l'arbre de sortie, les arbres tournant dans des sens de rotation opposés,
- une fourchette (4) mobile s'étendant à l'intérieur du carter de la boîte de vitesses (608) et adaptée pour coopérer avec ledit pignon (11) baladeur, et permettre par son déplacement une modification de rapport de transmission entre l'arbre d'entrée (21) et l'arbre de sortie (23),
**caractérisée en ce qu'**elle comprend en outre un palonnier (5) de commande du déplacement de ladite fourchette (4) prenant la forme d'une tige dont la portion centrale est cylindrique et qui est monté fixe sur la fourchette (4), ledit palonnier (5) s'étendant en partie à l'intérieur du carter de la boîte de vitesses (608) et comprenant une première extrémité et une deuxième extrémité, la première extrémité dudit palonnier (5) étant adaptée pour être reliée à un câble de commande (C) de sorte qu'une sollicitation du câble de commande (C) entraîne un changement de rapport de transmission.

2. Boîte de vitesses (608) selon la revendication 1, **caractérisée** en ce l'ensemble palonnier (5) et fourchette (4) étant monté mobile en rotation selon un axe vertical à l'intérieur du carter de la boîte de vitesses (608), les arbres d'entrée (21) et de sortie (23) s'étendant horizontalement.

3. Boîte de vitesses (608) selon la revendication 1 ou 2, **caractérisée en ce que** le carter de la boîte de vitesses (608) est formé de deux demi-coques, dites respectivement demi-coque (9) gauche et demi-coque (10) droite, assemblées en regard l'une de l'autre selon un plan de jonction vertical et définissant un logement de réception des arbres (21, 23), du pignon (12) baladeur, d'une partie du palonnier (5) et de la fourchette (1) notamment, lesdites demi-coques (9, 10) étant fabriquées en plastique injecté.

4. Boîte de vitesses (608) selon la revendication 3, **caractérisée en ce que** ladite première extrémité dudit palonnier (5) s'étend à travers une ouverture (40) latérale ménagée dans une première desdites demi-coques (9, 10).

5. Boîte de vitesses (608) selon la revendication 4, **caractérisée en ce que** la deuxième extrémité dudit palonnier (5) s'étend à travers une ouverture (40) latérale ménagée dans la deuxième desdites demi-coques (9, 10).

6. Boîte de vitesses (608) selon la revendication 4 ou 5, **caractérisée en ce que** la ou lesdites ouvertures (40) sont dimensionnées pour laisser passer l'air entre l'intérieur et l'extérieur du carter.

7. Boîte de vitesses (608) selon la revendication 5 ou 6, **caractérisée en ce que** la deuxième extrémité dudit palonnier (5) est solidaire de la surface extérieure d'une desdites demi-coques (9, 10) par l'intermédiaire d'un ressort de rappel.

8. Boîte de vitesses (608) selon l'une des revendications 3 à 7, **caractérisée en ce que** les deux demi-coques (9, 10) sont assemblées par des moyens de solidarisation réversible, chacune desdites demi-coques (9, 10) comprenant sur sa surface de jonction avec l'autre demi-coque (9, 10) un joint d'étanchéité (13).

9. Equipement de motoculture **caractérisé en ce qu'**il comprend une boîte de vitesses (608) selon l'une des revendications 1 à 8.

10. Equipement selon la revendication 9, **caractérisé en ce qu'**il comprend une poignée (P) de commande et un câble (C) de commande reliant ladite poignée (50) de commande à une première extrémité dudit palonnier (5) de sorte qu'une sollicitation de la poignée (P) de commande entraîne un changement de rapport de transmission.

## Patentansprüche

1. Getriebe (608) für eine motorisierte landwirtschaftliche Ausrüstung, das dazu bestimmt ist, Motormittel mit Antriebsorganen der Ausrüstung zu verbinden, wobei das Getriebe (608) Folgendes umfasst:
- ein Gehäuse des Getriebes (608),
- eine Antriebswelle (21), die dazu geeignet ist, von den Motormitteln drehend angetrieben zu werden,
- eine Abtriebswelle (23), die dazu geeignet ist, die Antriebsorgane der Ausrüstung anzutreiben,
- ein als Schieberad (11) bezeichnetes Rad, das beweglich auf der Antriebswelle (21) montiert und dazu geeignet ist, zumindest eine Vorwärtslaufposition einzunehmen, in der ein erstes Übersetzungsverhältnis zwischen der Antriebswelle und der Abtriebswelle vorliegt, wobei sich die Wellen in derselben Drehrichtung drehen, und zumindest eine Rückwärtslaufposition einzunehmen, in der ein zweites Übersetzungsverhältnis zwischen der Antriebswelle und der Abtriebswelle vorliegt, wobei sich die Wellen in entgegengesetzte Drehrichtungen drehen,
- eine bewegliche Gabel (4), die sich im Inneren des Gehäuses des Getriebes (608) erstreckt und dazu geeignet ist, mit dem Schieberad (11) zusammenzuwirken und durch seine Bewegung eine Änderung des Übersetzungsverhältnisses zwischen der Antriebswelle (21) und der Abtriebswelle (23) zu ermöglichen,
**dadurch gekennzeichnet, dass** es außerdem einen Balken (5) zur Steuerung der Bewegung der Gabel (4) aufweist, der die Form einer Stange aufweist, deren mittlerer Teil zylindrisch ist und die fest an der Gabel (4) montiert ist, wobei sich der Balken (5) teilweise innerhalb des Gehäuses des Getriebes (608) erstreckt und ein erstes Ende und ein zweites Ende umfasst, wobei das erste Ende des Balkens (5) dazu geeignet ist, mit einem Steuerkabel (C) verbunden zu sein, so dass eine Beanspruchung des Steuerkabels (C) eine Änderung des Übersetzungsverhältnisses bewirkt.

2. Getriebe (608) nach Anspruch 1, **dadurch gekennzeichnet, dass** die Baugruppe aus Balken (5) und Gabel (4) um eine vertikale Achse im Inneren des Gehäuses des Getriebes (608) drehbar montiert ist, wobei sich die Antriebs- (21) und die Abtriebswelle (23) horizontal erstrecken.

3. Getriebe (608) nach Anspruch 1 oder 2, **dadurch gekennzeichnet, dass** das Gehäuse des Getriebes (608) aus zwei Halbschalen ausgebildet ist, die als linke Halbschale (9) bzw. rechte Halbschale (10) bezeichnet werden, einander in einer vertikalen Verbindungsebene gegenüberliegend angeordnet sind und eine Aufnahme der Wellen (21, 23), des Schieberads (12), eines Teils des Balkens (5) und insbesondere der Gabel (1) bilden, wobei die Halbschalen (9, 10) aus spritzgegossenem Kunststoff hergestellt sind.

4. Getriebe (608) nach Anspruch 3, **dadurch gekennzeichnet, dass** sich das erste Ende des Balkens (5) durch eine in einer ersten der Halbschalen (9, 10) vorgesehene seitliche Öffnung (40) erstreckt.

5. Getriebe (608) nach Anspruch 4, **dadurch gekennzeichnet, dass** sich das zweite Ende des Balkens (5) durch eine in der zweiten der Halbschalen (9, 10) vorgesehene seitliche Öffnung (40) erstreckt.

6. Getriebe (608) nach Anspruch 4 oder 5, **dadurch gekennzeichnet, dass** die Öffnung(en) (40) so dimensioniert sind, dass die Luft zwischen dem Gehäuseinneren und -äußeren passieren kann.

7. Getriebe (608) nach Anspruch 5 oder 6, **dadurch gekennzeichnet, dass** das zweite Ende des Balkens (5) mittels einer Rückstellfeder fest mit der Außenfläche einer der Halbschalen (9, 10) verbunden ist.

8. Getriebe (608) nach einem der Ansprüche 3 bis 7, **dadurch gekennzeichnet, dass** die beiden Halbschalen (9, 10) mit Hilfe von reversiblen Verbindungsmitteln zusammengefügt sind, wobei jede der Halbschalen (9, 10) an ihrer Verbindungsfläche mit der anderen Halbschale (9, 10) eine Dichtung (13) umfasst.

9. Motorisierte landwirtschaftliche Ausrüstung, **dadurch gekennzeichnet, dass** sie ein Getriebe (608) nach einem der Ansprüche 1 bis 8 umfasst.

10. Ausrüstung nach Anspruch 9, **dadurch gekennzeichnet, dass** sie einen Steuergriff (P) und ein Steuerkabel (C), das den Steuergriff (50) mit einem ersten Ende des Balkens (5) verbindet, umfasst, so dass eine Beanspruchung des Steuergriffs (P) eine Änderung des Übersetzungsverhältnisses bewirkt.

## Claims

1. Gearbox (608) for a mechanized farming implement to interconnect motor means with elements for driving the implement, the gearbox (608) comprising:
- a casing of the gearbox (608),
- an input shaft (21) adapted to being driven in rotation by said motor means;
- an output shaft (23) adapted to driving said driving elements of the implement,
- a pinion, called a sliding pinion (11), mounted so as to be mobile on the input shaft and being adapted to taking at least one forward gear-speed position in which a first transmission ratio is achieved between the input shaft and the output shaft, the shafts rotating in the same sense of rotation, and at least one reverse gear-speed position in which a second transmission ratio is achieved between the input shaft and the output shaft, the shafts rotating in opposite senses of rotation,
- a mobile bracket (4) extending into the interior of the casing of the gearbox (608) and being adapted to cooperating with said sliding pinion (11) and, enabling, by its movement, a modification of the transmission ratio between the input shaft (21) and the output shaft (23),
**characterized in that** it furthermore comprises a control lever (5) to control the movement of said bracket (4), taking the form of a rod partly extending into the interior of the casing of the gearbox (608), a first extremity of said control lever (5) being adapted to being connected to a control cable (C) so that a load exerted on the control cable (C) leads to a change in the gear ratio.

2. Gearbox (608) according to claim 1, **characterized in that** the unit formed by the control lever (5) and the bracket (4) is mounted so as to be rotationally mobile on a vertical axis within the casing of the gearbox (608), the input shaft (21) and output shaft (23) extending horizontally.

3. Gearbox (608) according to claim 1 or 2, **characterized in that** the casing of the gearbox (608) is formed by two half-shells, respectively called a left half-shell (9) and a right half-shell (10), assembled so as to be facing each other in a vertical joining line and defining a housing to receive the shafts (21, 23), the sliding pinion (12), a part of the control lever (5) and of the bracket (1) in particular, said half-shells (9, 10) being manufactured out of injection molded plastic.

4. Gearbox (608) according to claim 3, **characterized in that** said first extremity of said control lever (5) extends through a lateral aperture (40) made in a first of said first half-shells (9, 10).

5. Gearbox (608) according to claim 4, **characterized in that** the second extremity of said control lever (5) extends through a side aperture (40) made in the second of said half-shells (9, 10).

6. Gearbox (608) according to claim 4 or 5, **characterized in that** said aperture or apertures (40) are sized to let through air between the interior and the exterior of the casing.

7. Gearbox (608) according to claim 5 or 6, **characterized in that** the second extremity of said control lever (5) is fixedly attached to the external surface of one of said half-shells (9, 10) by means of a return spring.

8. Gearbox (608) according to one of the claims 3 to 7, **characterized in that** the two half-shells (9, 10) are assembled by reversible attachment means, each of said half-shells (9, 10) comprising a seal (13) on its joining surface with the other half-shell (9, 10).

9. Mechanized farming implement **characterized in that** it comprises a gearbox according to any one of the claims 1 to 8.

10. Implement according to claim 9, **characterized in that** it comprises a control grip (P) and a control cable (C) connecting said control grip (50) to a first extremity of said control lever (5) so that any load exerted on the control grip (P) leads to a change in the transmission ratio.
